# EUROPÄISCHE PATENTSCHRIFT

(11) **EP 1 978 397 B1**
(45) Veröffentlichungstag und Bekanntmachung des Hinweises auf die Patenterteilung: **20.09.2017**
(21) Anmeldenummer: 08450040.4
(22) Anmeldetag: 26.03.2008
(51) Int. Cl.: G02C 5/00, G02C 5/22

(54) **Federscharnier für eine Brille**
Spring hinge for spectacles
Charnière à ressort pour lunettes

(30) Priorität: 03.04.2007 AT 5192007
(43) Veröffentlichungstag der Anmeldung: 08.10.2008
(73) Patentinhaber: Redtenbacher Präzisionsteile Ges. M.B.H., 4644 Scharnstein (AT)
(72) Erfinder: Buchegger, Harald, 4817 St. Konrad (AT)
(74) Vertreter: Patentanwaltskanzlei Hübscher

(56) Entgegenhaltungen:
- EP-A- 0 736 790
- WO-A-03/071338
- DE-C1- 3 628 682
- US-A- 4 222 148
- US-A- 6 050 686

## Beschreibung

### Technisches Gebiet

Die Erfindung bezieht sich auf ein Federscharnier für eine Brille mit den Merkmalen des Anspruchs 1.

### Stand der Technik

Federscharniere für Brillen erlauben eine Überstreckung der durch einen Anschlag vorgegebenen Strecklage des Scharniergelenks, ohne eine Beschädigung des Scharniergelenks befürchten zu müssen, und sichern zumindest die Strecklage durch einen federnden Anschlag. Obwohl Federscharniere für Brillen in verschiedenen Ausführungsformen bekannt sind, ist allen Federscharnieren gemein, dass einer der beiden durch eine Scharnierachse miteinander gelenkig verbundenen Scharnierteile in einem Scharniergehäuse verschiebbar gelagert ist und mit wenigstens einer Feder im Sinne eines Einziehens in das Scharniergehäuse beaufschlagt wird. Der andere Scharnierteil stützt sich zumindest in der Strecklage der Scharnierteile über eine Anschlagfläche an der Stirnseite des Scharniergehäuses unter einer federnden Vorspannung ab, sodass die dadurch bedingte Strecklage vorgegeben ist. Wird der Brillenbügel über diese Strecklage hinaus verschwenkt, so kann der im Scharniergehäuse gelagerte Scharnierteil gegen die Kraft der Feder verlagert werden und die Schwenkbewegung des Bügels über die anschlagbegrenzte Strecklage hinaus freigeben. Um nicht nur die Strecklage, sondern auch die gegen die Brillenfassung eingeschwenkte Bügellage zu sichern, ist es bekannt (EP 0 736 790 A1), in der Stirnseite des Scharniergehäuses eine V-förmige Aussparung mit einem Öffnungswinkel von 90° vorzusehen, in die ein rechtwinkeliger Ansatz des mit der Brillenfassung verbundenen Scharnierteils in zwei um 90° winkelversetzten Drehstellungen eingreifen kann. Unabhängig davon, ob die federnde Abstützung dieses Scharnierteils in zwei oder nur in einer Schwenklage vorgesehen ist, wird für den im Scharniergehäuse verschiebbar gelagerten Scharnierteil ein ausreichendes Führungsspiel erforderlich, in dessen Rahmen sich eine begrenzte radiale Verlagerungsmöglichkeit des Brillenbügels ergibt, die zumindest in der Gebrauchsstellung des Bügels tunlichst vermieden werden soll.

Um den der Brillenfassung zugehörigen Scharnierteil bezüglich der durch die Verschiebeführung im Scharniergehäuse gebildeten Achse drehfest gegenüber dem Scharniergehäuse abzustützen, ist es darüber hinaus bekannt (WO 03/07 13 38 A1), am Scharniergehäuse über dessen Stirnfläche vorstehende Ansätze vorzusehen, die zwischen die beiden gabelartigen Scharnierlappen des der Brillenfassung zugehörigen Scharnierteils eingreifen. Da auch dieser Eingriff mit einem gewissen Führungsspiel erfolgen muss, um die erforderliche Leichtigkeit der Bügelverschwenkung zu gewährleisten, ist wiederum keine spielfreie Bügelabstützung in der Gebrauchslage der Brille gegeben.

### Darstellung der Erfindung

Der Erfindung liegt somit die Aufgabe zugrunde, ein Federscharnier der eingangs geschilderten Art so auszugestalten, dass eine weitgehend spielfreie Führung des Brillenbügels sichergestellt werden kann, ohne die leichtgängige Verschiebbarkeit des im Scharniergehäuse gelagerten Scharnierteils zu gefährden.

Die Erfindung löst die gestellte Aufgabe dadurch, dass die zwischen der Anschlagfläche des einen Scharnierteils und der Stirnseite des Scharniergehäuses vorgesehene Zentrierung wenigstens eine in Umfangsrichtung der Scharnierachse verlaufende Zentriernut und einen zumindest in der Strecklage der Scharnierteile in diese Zentriernut eingreifenden Zentrieransatz umfasst.
Durch die zwischen dem Scharniergehäuse und dem nicht im Scharniergehäuse verschiebbar gelagerten Scharnierteil vorgesehene Zentrierung in Form wenigstens einer in Umfangsrichtung der Scharnierachse verlaufenden Zentriernut und eines zumindest in der Strecklage der Scharnierteile in diese Zentriernut eingreifenden Zentrieransatzes werden die beiden Scharnierteile gegenüber dem Scharniergehäuse weitgehend spielfrei festgelegt, sodass sich eine entsprechend spielfreie Führung für den Brillenbügel ergibt. Selbst bei einer nur in einem begrenzten Schwenkbereich vorgesehenen Zentrierung des Bügels ist für einen sicheren Eingriff des Zentrieransatzes in die Zentriernut gesorgt. Die einziehende Federbelastung des im Scharniergehäuse verschiebbar gelagerten Scharnierteils bedingt ein federndes Andrücken der Anschlagfläche des nicht im Scharniergehäuse gelagerten Scharnierteils an die Gehäusestirnseite mit der Wirkung, dass der Zentrieransatz spielfrei in die Zentriernut eingreift, die einen keilförmigen Querschnitt aufweist, und zwar unabhängig davon, ob der Zentrieransatz der Gehäusestirnseite oder der Anschlagfläche zugehört.
Obwohl der Zentrieransatz grundsätzlich auch auf der Anschlagfläche des einen Scharnierteils vorgesehen werden kann, ergeben sich vorteilhaftere Konstruktionsbedingungen, wenn der Zentrieransatz der Stirnseite des Scharniergehäuses und die Zentriernut der Anschlagfläche dieses Scharnierteils zugeordnet werden, weil die Anschlagfläche des Scharnierteils einfacher mit einer Zentriernut als mit einem Zentrieransatz versehen werden kann, insbesondere dann, wenn sich die Zentriernut über den gesamten Schwenkwinkel des zugehörigen Scharnierteils erstrecken soll, um einen ständigen Zentriereingriff sicherzustellen.

Zur besseren Abstützung des Bügels in der Zentrierung kann auf der Stirnseite des Scharniergehäuses zu beiden Seiten eines mittigen Scharnierlappens des im Scharniergehäuse verschiebbar geführten Scharnierteils je ein Zentrieransatz vorgesehen werden, wobei die den mittigen Scharnierlappen zwischen sich aufnehmenden Scharnierlappen des anderen Scharnierteils im Bereich ihrer Anschlagflächen je eine Zentriernut zur Aufnahme der Zentrieransätze bilden, sodass eine Bügelzentrierung zu beiden Seiten des mittleren Scharnierlappens des Federscharniers erfolgt.

### Kurze Beschreibung der Zeichnung

In der Zeichnung ist der Erfindungsgegenstand beispielsweise dargestellt. Es zeigen
- Fig. 1: ein erfindungsgemäßes Federscharnier einer Brille in einer vereinfachten Seitenansicht,
- Fig. 2: dieses Federscharnier in einer Draufsicht,
- Fig. 3: einen Schnitt nach der Linie III-III der Fig. 1,
- Fig. 4: eine der Fig. 1 entsprechende Darstellung einer Konstruktionsvariante eines erfindungsgemäßen Federscharniers,
- Fig. 5: das Federscharnier nach der Fig. 4 in einer Draufsicht und
- Fig. 6: das Federscharnier nach den Fig. 4 und 5 ausschnittsweise im Bereich der Zentrierung in einem Schnitt nach der Linie VI-VI der Fig. 4 in einem größerem Maßstab.

### Weg zur Ausführung der Erfindung

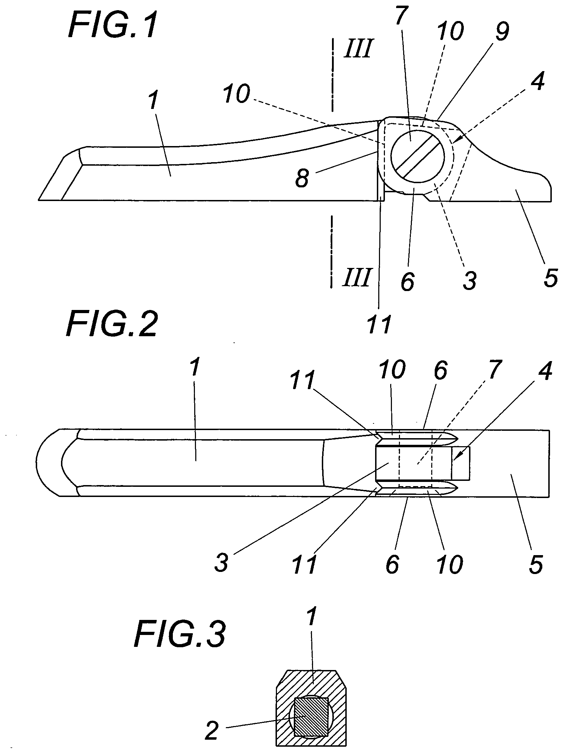

Das Federscharnier nach den Fig. 1 bis 3 weist in herkömmlicher Weise ein mit einem Brillenbügel verbindbares Scharniergehäuse 1 auf, in dem ein Gleitstück 2 eines einen mittigen Scharnierlappen 3 bildenden Scharnierteils 4 verschiebbar geführt ist. Dieses Gleitstück 2 wird mit Hilfe einer Feder im Sinne eines Einschiebens des Scharnierteils 4 in das Scharniergehäuse 1 beaufschlagt.

Der mit einem Brillenbacken verbindbare Scharnierteil 5 weist zwei den mittleren Scharnierlappen 3 beidseitig umfassende Scharnierlappen 6 auf. Die in Form einer Schraube die Scharnierlappen 3 und 6 durchsetzende Scharnierachse ist mit 7 bezeichnet. Der dem Brillenbacken zugeordnete Scharnierteil 5 bildet zwei Anschlagflächen 8 und 9, die mit der Stirnseite des Scharniergehäuses 1 zusammenwirken und einerseits eine in der Zeichnung dargestellte Strecklage der Scharnierteile 4, 5 und damit die Strecklage des Bügels sowie anderseits eine gegen den Brillenrahmen eingeklappte Bügelstellung festlegen, weil die Anschlagflächen 8, 9 in der jeweiligen Schwenklage des Scharniergelenks durch die das Gleitstück 2 beaufschlagende Feder an die Stirnseite des Scharniergehäuses 1 angedrückt werden.

Das federnde Andrücken der Anschlagflächen 8 und 9 an die Gehäusestirnseite kann vorteilhaft zu einer spielfreien Führung des Bügels genützt werden. Zu diesem Zweck ist zwischen der Stirnseite des Scharniergehäuses 1 und den Anschlagflächen 8, 9 eine Zentrierung vorgesehen, die einerseits aus wenigstens einer im Querschnitt keilförmigen Zentriernut 10 und anderseits aus einem in die Zentriernut 10 eingreifenden Zentrieransatz 11 gebildet wird. Gemäß dem Ausführungsbeispiel nach den Fig. 1 bis 3 weist jeder der beiden Scharnierlappen 6 des Scharnierteiles 5 eine sich über beide Anschlagflächen 8, 9 erstreckende Zentriernut 10 auf, während auf der Stirnseite des Scharniergehäuses 1 entsprechende Zentrieransätze 11 in Form von Scharnierleisten vorgesehen sind, die wie die Zentriernuten 10 bezüglich der Scharnierachse 7 in Umfangsrichtung verlaufen, sodass der Scharnierteil 5 gegenüber den Scharniergehäuse 1 in Richtung der Scharnierachse 7 spielfrei festgehalten wird, weil zufolge der einziehenden Federbelastung des Scharnierteils 4 die Zentrieransätze 11 in die Zentriernuten 10 gedrückt werden. Wegen des Verlaufs der Zentriernuten 10 und der Zentrieransätze 11 in Umfangsrichtung wird die Verschwenkbarkeit des Gelenkscharniers durch die Zentrierung nicht beeinträchtigt, die aufgrund des ständigen Eingriffs der Zentrieransätze 11 in die Zentriernuten 10 über den gesamten Schwenkbereich des Gelenkscharniers wirksam ist.

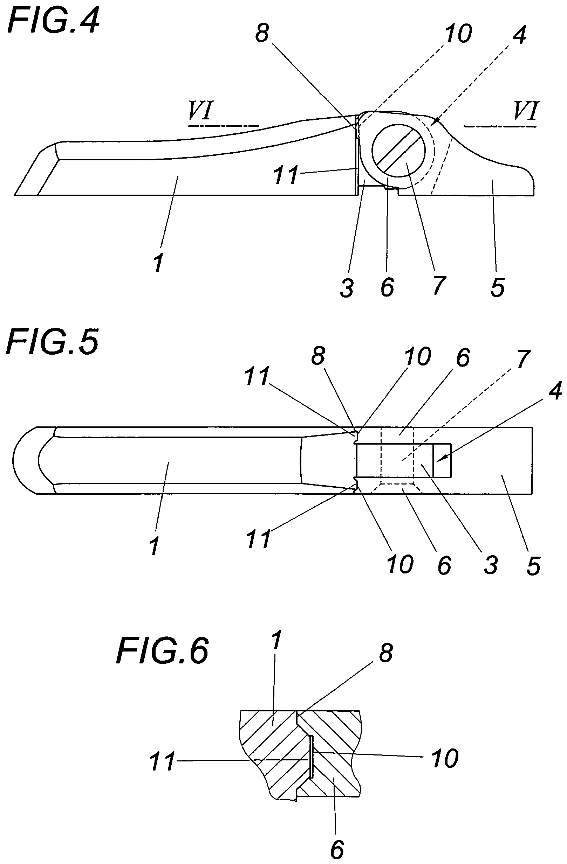

Das Federscharnier gemäß der Ausführungsform nach den Fig. 4 bis 6 unterscheidet sich von dem nach den Fig. 1 bis 3 im Wesentlichen nur durch die Art der Zentrierung, weil die Zentrierung lediglich zwischen der Anschlagfläche 8 des Scharnierteils 5 für die Strecklage des Scharniergelenks und der Stirnfläche des Scharniergehäuses 1 wirksam wird. Die Zentriernuten 10 sind im Bereich der Anschlagfläche 8 vorgesehen, die sich nur über einen Teilbereich der Stirnseite des Scharniergehäuses 1 erstreckt. Dies bedeutet, dass der mit dem Scharniergehäuse 1 verbundene Bügel nur in der Strecklage, also in seiner Gebrauchslage, spielfrei gehalten wird, was aber für den Gebrauch der Brille ausreicht.

## Patentansprüche

1. Federscharnier für eine Brille mit einem Scharniergehäuse (1) und mit zwei durch eine Scharnierachse (7) miteinander gelenkig verbundenen Scharnierteilen (4, 5), von denen ein Scharnierteil (4) in dem Scharniergehäuse (1) gegen eine einziehende Federkraft verschiebbar gelagert ist und der andere am Scharniergehäuse (1) über eine Zentrierung abgestützte Scharnierteil (5) wenigstens eine in einer Streckstellung der Scharnierteile (4, 5) mit der Stirnseite des Scharniergehäuses (1) zusammenwirkende Anschlagfläche (8, 9) bildet, **dadurch gekennzeichnet, dass** die zwischen der Anschlagfläche (8, 9) des einen Scharnierteils (5) und der Stirnseite des Scharniergehäuses (1) vorgesehene Zentrierung wenigstens eine in Umfangsrichtung der Scharnierachse (7) verlaufende, im Querschnitt keilförmige Zentriernut (10) und einen zumindest in der Strecklage der Scharnierteile (4, 5) in diese Zentriernut (10) eingreifenden Zentrieransatz (11) umfasst.

2. Federscharnier nach Anspruch 1, **dadurch gekennzeichnet, dass** der Zentrieransatz (11) der Stirnseite des Scharniergehäuses (1) und die Zentriernut (10) der Anschlagfläche (8, 9) des einen Scharnierteils (5) zugeordnet sind.

3. Federscharnier nach Anspruch 2, **dadurch gekennzeichnet, dass** sich die Zentriernut (10) über den gesamten Schwenkwinkel des zugehörigen Scharnierteils (5) erstreckt.

4. Federscharnier nach einem der Ansprüche 1 bis 3, **dadurch gekennzeichnet, dass** auf der Stirnseite des Scharniergehäuses (1) zu beiden Seiten eines mittigen Scharnierlappens (3) des im Scharniergehäuse (1) verschiebbar geführten Scharnierteils (4) je ein Zentrieransatz (11) vorgesehen ist und dass die den mittigen Scharnierlappen (3) zwischen sich aufnehmenden Scharnierlappen (6) des anderen Scharnierteils (5) im Bereich ihrer Anschlagflächen (8, 9) je eine Zentriernut (10) zur Aufnahme der Zentrieransätze (11) bilden.

## Claims

1. Spring hinge for spectacles having a hinge housing (1) and having two hinge parts (4, 5) which are connected in an articulated manner to one another by a hinge spindle (7) and of which one hinge part (4) is mounted in the hinge housing (1) so as to be displaceable against a retracting spring force and the other hinge part (5), which is supported on the hinge housing (1) via a centring, forms at least one stop face (8, 9) which, in a stretched position of the hinge parts (4, 5), cooperates with the front side of the hinge housing (1), **characterised in that** the centring provided between the stop face (8, 9) of one hinge part (5) and the front side of the hinge housing (1) comprises at least one centring groove (10), which extends in the circumferential direction of the hinge spindle (7) and has a wedge-shaped cross-section, and a centring projection (11) which engages into this centring groove (10) at least in the stretched position of the hinge parts (4, 5).

2. Spring hinge as claimed in claim 1, **characterised in that** the centring projection (11) is allocated to the front side of the hinge housing (1) and the centring groove (10) is allocated to the to the stop face (8, 9) of the one hinge part (5).

3. Spring hinge as claimed in claim 2, **characterised in that** the centring groove (10) extends over the entire pivot angle of the associated hinge part (5).

4. Spring hinge as claimed in any one of claims 1 to 3, **characterised in that** a centring projection (11) is provided in each case on the front side of the hinge housing (1) on both sides of a central hinge tab (3) of the hinge part (4) displaceably guided in the hinge housing (1), and the central hinge tabs (3) form in each case a centring groove (10) for receiving the centring projections (11) between mutually receiving hinge tabs (6) of the other hinge part (5) in the region of their stop faces (8, 9).

## Revendications

1. Charnière à ressort pour lunettes avec une boîte à charnière (1) et avec deux parties de charnière (4, 5) couplées de manière articulée entre elles par un axe de charnière (7), une des parties de charnière (4) étant logée dans la boîte à charnière (1) et déplaçable par coulissement à l'encontre d'une force de ressort de rappel, et l'autre des parties de charnière (5), formant, au moins dans une position de déplacement des parties de charnière (4, 5), une surface de butée d'appui (8, 9), coopérant avec le côté frontal de la boîte à charnière (1), **caractérisée en ce que** le centrage prévu, comporte entre la surface d'appui en butée (8, 9) de l'une des parties de charnière (5), pour la face frontale de la boîte à charnière (1), et s'étendant dans la direction périphérique de l'axe de charnière (7), au moins une nervure de centrage (10) ayant une section transversale conique, et un agencement de centrage (11), s'engageant au moins au cours de la trajectoire des parties de charnière (4, 5) dans cette nervure de centrage (10).

2. Charnière à ressort selon la revendication 1, **caractérisée en ce que** l'agencement de centrage (11) est affecté à la face frontale de la boîte à charnière (1) et la nervure de centrage (10), aux surfaces de butée d'appui (8, 9) de l'une des parties de charnière (5).

3. Charnière à ressort selon la revendication 2, **caractérisée en ce que** la nervure de centrage (10) s'étend sur tout l'angle de pivotement de la partie de charnière (5) correspondante.

4. Charnière à ressort selon l'une des revendications 1 à 3, **caractérisée en ce que** la face frontale de la boîte de charnière (1) comporte, des deux côtés, un flasque de charnière (3) central qui est mobile en coulissement avec la partie de charnière (4) comportant respectivement un ensemble de centrage (11) prévu dans la boîte à charnière (1) et que les flasques de charnière (6) de l'autre partie de charnière (5), recevant entre eux le flasque de charnière central (3), forme respectivement, dans le secteur de sa surface d'appui en butée (8, 9), une nervure de centrage (10) pour recevoir les ensembles de centrage (11).
